# EUROPEAN PATENT APPLICATION

(11) **EP 4 481 454 A1**
(43) Date of publication of application: **25.12.2024**
(21) Application number: 24182438.2
(22) Date of filing: 14.06.2024
(51) Int. Cl.: G02B 6/44

(54) **OPTICAL FIBER CASSETTE**

(30) Priority: 22.06.2023 US 202363509621 P; 22.06.2023 US 202363522556 P
(71) Applicant: AFL Telecommunications LLC, Duncan, SC 29334 (US)
(72) Inventor: Davidson, Aran James Russell, Duncan, 29334 (US); Raven, Asher Leong, Duncan, 29334 (US)
(74) Representative: Serjeants LLP

(57) **Abstract**

An optical fiber cassette (100) is provided including a main body (110) including a pair of sidewalls (108) and an end wall (106) extending between the pair of sidewalls (108). An adapter wall (130) is positioned between the sidewalls (108) of the main body (110). The adapter wall (130) is positioned along the length distal to the end wall (106). A first operable end of the adapter wall (130) extends from an exterior of main body (100). A second operable end of the adapter wall (130) extends to an interior of the main body (110). A cover (120) is disposed onto the main body (110). The cover (120) includes a passage wall (133) at which a routing passage (135) extends from a first cable opening (117) at a first end and a second cable opening at a second end. The routing passage (135) extends to a passthrough opening (160) extending through the cover (120) to a slack storage area formed at the main body.

## Description

### PRIORITY STATEMENT

The present application claims the benefit of priority to U.S. provisional patent application number 63/522,556 filed on June 22, 2023, titled "OPTICAL FIBER SPLICE AND CONNECTION CASSETTE", and U.S. provisional patent application number 63/509,621 filed on June 22, 2023, titled "OPTICAL FIBER SPLICE AND CONNECTION FASTENER", the disclosures of which are incorporated herein by reference in their entireties.

### FIELD

The present disclosure relates generally to fiber optic telecommunications cassettes.

### BACKGROUND

A common scenario in fiber optic telecommunications is making optical connection points that transition from a fiber optic cable to a fiber optic connection within a module inside a modular patch panel mounted into a datarack inside a datacenter. However, when splicing fiber optic pigtails to the fiber optic cable inside a module, the available space is limited and inhibits providing fiber management, cable tie/mount points, and cable routing from front or rear of the cassette. The lack of space makes handling fiber and performing splices difficult and time consuming, which may limit the connection points that are made, prohibitively increase the cost, or potentially adversely affect quality of connection.

Existing solutions generally require access to the rear of the datarack and may be insufficient for performing a splice operation from the front of the datarack. Generally, a splice cassette will share its fiber storage area between internal and external cable fiber, which adds to the difficulty of splicing and contributes to a risk of damage to the fiber when re-accessing the module to perform upgrades or find faults.

An optical fiber cassette and a datarack addressing one or more aforementioned issues would be advantageous and beneficial.

### BRIEF DESCRIPTION

Aspects and advantages of the invention will be set forth in part in the following description, or may be understood from the description, or may be learned through practice of the invention.

An aspect of the present disclosure is directed to an optical fiber cassette including a main body including a pair of sidewalls and an end wall extending between the pair of sidewalls. An adapter wall is positioned between the sidewalls of the main body. The adapter wall is positioned along the length distal to the end wall. A first operable end of the adapter wall extends from an exterior of main body. A second operable end of the adapter wall extends to an interior of the main body. A cover is disposed onto the main body. The cover includes a passage wall at which a routing passage extends from a first cable opening at a first end and a second cable opening at a second end. The routing passage extends to a passthrough opening extending through the cover to a slack storage area formed at the main body.

The passage wall at the cover may extend from the first cable opening and the second cable opening to the passthrough opening. The passage wall forming the routing passage may be configured to receive a cable from the first or second cable openings.

The slack storage area may be formed at the interior of the main body between the pair of sidewalls, the end wall, and the adapter wall at the main body.

The slack storage area may comprise an internal wall extending along a height from a base wall toward the cover.

The routing passage may form a curved or serpentine routing passage.

The cover and the main body may comprise a fastener opening into which a fastener is extendable to secure the cover to the main body.

The passthrough opening may be positioned alongside the end wall or the sidewall.

The cover may comprise a latch configured to selectively attach and release at a latch interface at the sidewall.

The main body may be a unitary, monolithic component.

A cable retention interface may be positioned at the first cable opening, the second cable opening, or both.

The cable retention interface may form an arcuate opening through which the cable, or portions thereof, is extendable.

The optical fiber cassette may comprise an adapter base wall extending along the width between the sidewalls at the main body. The adapter base wall may extend at least partially along the length from the adapter wall. The first cable opening may be at least partially formed through the adapter base wall.

Another aspect of the present disclosure is directed to an optical fiber cassette including a main body including a pair of sidewalls extending along a length and an end wall extending along a width between the pair of sidewalls. The sidewalls and the end wall each extend along a height. An adapter wall is positioned between the sidewalls of the main body. The adapter wall is positioned along the length distal to the end wall. A first operable end of the adapter wall extends from an exterior of main body. A second operable end of the adapter wall extends to an interior of the main body. A cover is disposed onto the main body. The cover includes a passage wall at which a routing passage extends from a cable opening at a first end or a second end. The routing passage extends to a passthrough opening extending through the cover to a slack storage area formed at the main body.

The passage wall at the cover may extend from the cable opening to the passthrough opening. The passage wall forming the routing passage may be configured to receive a cable from the cable opening.

The slack storage area may be formed at the interior of the main body between the pair of sidewalls, the end wall, and the adapter wall at the main body.

The slack storage area may comprise an internal wall extending along a height from a base wall toward the cover.

The cover and the main body may comprise a fastener opening through which a fastener is extendable to secure the cover to the main body.

The passthrough opening may be positioned alongside the end wall or the sidewall.

A cable retention interface may be positioned at the cable opening.

The optical fiber cassette may comprise an adapter base wall extending along the width between the sidewalls at the main body. The adapter base wall may extend at least partially along the length from the adapter wall. The first cable opening may be at least partially formed through the adapter base wall.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF FIGURES

A full and enabling disclosure of the present invention, including the best mode thereof, directed to one of ordinary skill in the art, is set forth in the specification, which makes reference to the appended figures, in which:
Fig. 1 provides a perspective view of an embodiment of a telecommunications cassette in accordance with aspects of the present disclosure;
Fig. 2 provides a perspective view of an embodiment of the telecommunications cassette viewing an interior volume in accordance with aspects of the present disclosure;
Fig. 3 provides a perspective view of an embodiment of the telecommunications cassette with covers removed in accordance with aspects of the present disclosure;
Fig. 4 provides a perspective view of an embodiment of the telecommunications cassette with covers removed in accordance with aspects of the present disclosure;
Fig. 5 provides a perspective view of an embodiment of a telecommunications cassette depicting a first side in accordance with aspects of the present disclosure;
Fig. 6 provides a perspective view of an embodiment of the telecommunications cassette of Fig. 5 depicting a second side in accordance with aspects of the present disclosure;
Fig. 7 provides a perspective view of an embodiment of the telecommunications cassette of Fig. 5 in accordance with aspects of the present disclosure;
Fig. 8 provides a perspective view of an embodiment of the telecommunications cassette of Fig. 5 in accordance with aspects of the present disclosure;

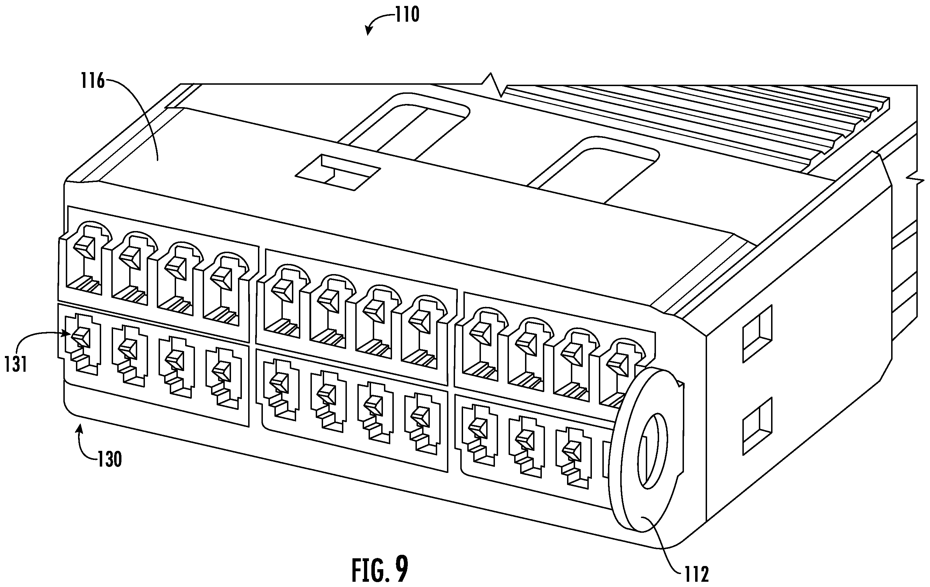

Fig. 9 provides a perspective view of an embodiment of the telecommunications cassette of Fig. 5 in accordance with aspects of the present disclosure;
Fig. 10 provides a perspective view of an embodiment of a cover for the telecommunications cassette in accordance with aspects of the present disclosure;
Fig. 11 provides a perspective view of an internal view of an embodiment of the telecommunications cassette in accordance with aspects of the present disclosure;
Fig. 12 provides a perspective view of an internal view of an embodiment of the telecommunications cassette in accordance with aspects of the present disclosure;
Fig. 13A depicts steps of a method for cable assembly to a cassette in accordance with aspects of the present disclosure;
Fig. 13B depicts steps of the method for cable assembly to a cassette in accordance with aspects of the present disclosure;
Fig. 13C depicts steps of the method for cable assembly to a cassette in accordance with aspects of the present disclosure;
Fig. 13D depicts steps of the method for cable assembly to a cassette in accordance with aspects of the present disclosure;
Fig. 13E depicts steps of the method for cable assembly to a cassette in accordance with aspects of the present disclosure;
Fig. 14 depicts an exemplary method for routing a cable into an embodiment of the cassette in accordance with aspects of the present disclosure;
Fig. 15 depicts an exemplary method for routing a cable into an embodiment of the cassette in accordance with aspects of the present disclosure;
Fig. 16 provides a plan view of an exemplary cable routing at a first volume of an embodiment of the cassette in accordance with aspects of the present disclosure;
Fig. 17 provides a plan view of an exemplary cable routing at a second volume of the embodiment of the cassette of Fig. 16 in accordance with aspects of the present disclosure;
Fig. 18A provides an exemplary ribbon fiber splice holder of embodiments of the cassette in accordance with aspects of the present disclosure;
Fig. 18B provides an exemplary discrete fiber splice holder of embodiments of the cassette in accordance with aspects of the present disclosure;
Fig. 19 depicts an exemplary installation of embodiments of the cassette to an embodiment of a datarack chassis in accordance with aspects of the present disclosure;
Fig. 20A provides an embodiment of a fastener assembly for a fiber optic cable and steps of a method for cable assembly to a cassette in accordance with aspects of the present disclosure;
Fig. 20B provides an embodiment of a fastener assembly for a fiber optic cable and steps of a method for cable assembly to a cassette in accordance with aspects of the present disclosure;
Fig. 20C provides an embodiment of a fastener assembly for a fiber optic cable and steps of a method for cable assembly to a cassette in accordance with aspects of the present disclosure;
Fig. 20D provides an embodiment of a fastener assembly for a fiber optic cable and steps of a method for cable assembly to a cassette in accordance with aspects of the present disclosure;
Fig. 20E provides a cross-sectional view of an exemplary embodiment of the fastener assembly at the fiber optic cable;
Fig. 20F provides a perspective view of an exemplary embodiment of the fastener assembly at the fiber optic cable;
Fig. 21 provides a top perspective view of an exemplary embodiment of a telecommunications cassette in accordance with aspects of the present disclosure;
Fig. 22 provides a bottom perspective view of an exemplary embodiment of the telecommunications cassette of Fig. 21 in accordance with aspects of the present disclosure;
Fig. 23 provides a bottom perspective view of an exemplary embodiment of the telecommunications cassette of Fig. 21 in accordance with aspects of the present disclosure;
Fig. 24 provides a front perspective view of an exemplary embodiment of a telecommunications cassette in accordance with aspects of the present disclosure;
Fig. 25A provides a plan view of an exemplary embodiment of the telecommunications cassette of Fig. 24 in accordance with aspects of the present disclosure;
Fig. 25B provides a plan view of an exemplary embodiment of the telecommunications cassette of Fig. 24 in accordance with aspects of the present disclosure;
Fig. 26 provides a rear perspective view of an exemplary embodiment of the telecommunications cassette of Fig. 24 in accordance with aspects of the present disclosure;
Fig. 27 provides an exploded rear perspective view of the exemplary embodiment of the telecommunications cassette of Fig. 26 in accordance with aspects of the present disclosure;
Fig. 28 provides an exploded front perspective view of the exemplary embodiment of the telecommunications cassette of Fig. 27 in accordance with aspects of the present disclosure;
Fig. 29A provides a detailed view of an exemplary embodiment of a portion of the telecommunications cassette of Fig. 24 in accordance with aspects of the present disclosure;
Fig. 29B provides a detailed view of the exemplary embodiment of the telecommunications cassette of Fig. 29A, including a cable extended thereto, in accordance with aspects of the present disclosure;
Fig. 30 provides an end view of an adapter wall of an exemplary embodiment of a telecommunications cassette in accordance with aspects of the present disclosure.

Repeat use of reference characters in the present specification and drawings is intended to represent the same or analogous features or elements of the present invention.

### DETAILED DESCRIPTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used with another embodiment to yield a still further embodiment. Thus, it is intended that the present invention covers such modifications and variations as come within the scope of the appended claims and their equivalents.

Embodiments of an optical fiber cassette and a datarack addressing one or more aforementioned issues are provided. Embodiments of the optical fiber cassette may form an optical fiber splice and connection cassette or an optical fiber cassette for pre-terminated fibers. Embodiments provided herein include a module providing a protective housing for an optical fiber connection. The module may include optical fiber adapters (e.g., but not limited to, LC, SC, MPO, MDC, SN, etc. adapters), internal optical fiber pigtails, separated internal and external fiber slack storage areas (e.g., positioned at opposite sides of the cassette), cable strain relief fixing point(s), and front and rear entry/exit for fiber optic cables.

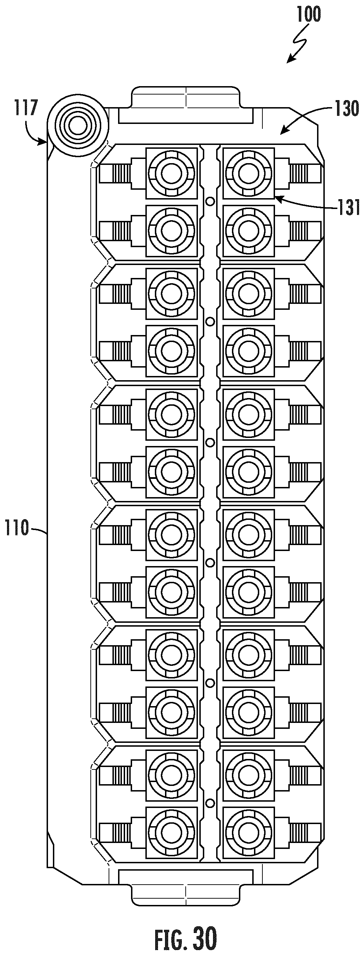

The cassette 100 includes a main body 110 configured to retain fiber optic adapter wall 130 (e.g., wall 130 including a plurality of fiber optic adapters, see, e.g., Fig. 30) and form a fiber slack storage area 140. The main body 110 includes a pair of sidewalls 108 extending along a length L. The main body 110 includes an end wall 106 extending between the sidewalls 108 along a width W. The end wall 106 and the sidewalls 108 extend along a height H. It should be appreciated that the length L, the width W, and the height H may extend along mutually orthogonal axes. The length L of sidewalls 108 may generally extend greater than the width W of the end wall 106. The height H of the sidewalls 108 and end wall 106 may generally extend less than the width W or the length L. The adapter wall 130 extends along width W between sidewalls 108. The end wall 106 is positioned opposite along the length L of the adapter wall 130.

In various embodiments, the main body 110 may form a unitary, monolithic component. For instance, the main body 110 may be formed as a single molded main body. Any appropriate manufacturing method may be utilized to form the main body 110 as a unitary, monolithic component, such as, but not limited to, molding, extrusion, or additive manufacturing.

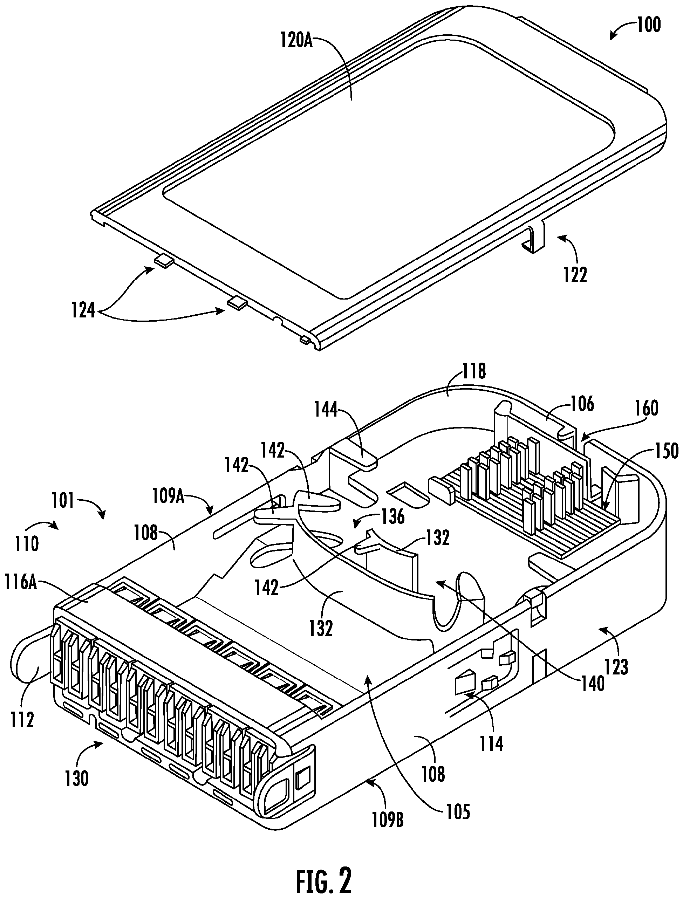

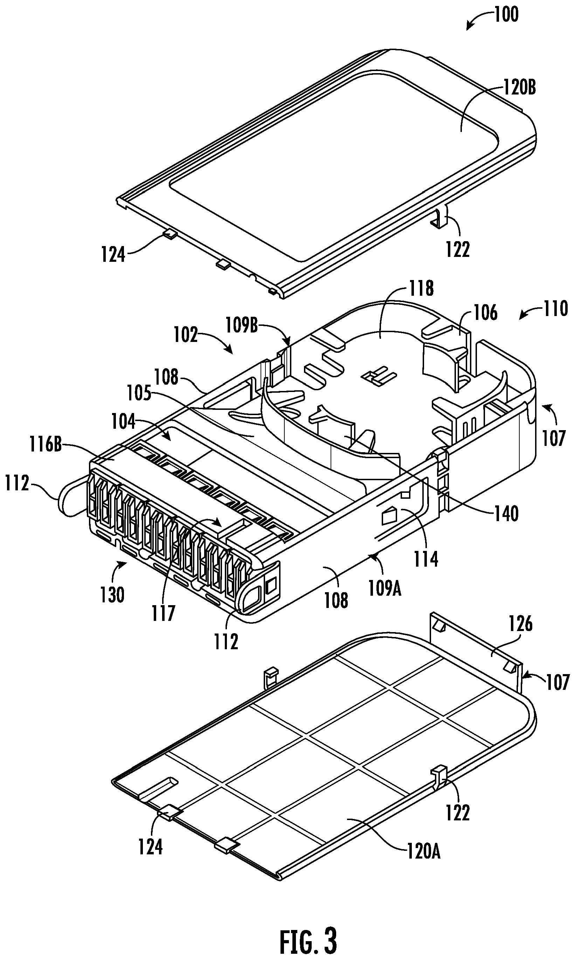

The cassette 100 includes a removable cover 120 providing a base wall and a top wall at the main body 110. For instance, Fig. 2 depicts a perspective top-down view of an embodiment of the cassette 100. The main body 110 includes a partition wall 118 extending between the sidewalls 108, end wall 106, and adapter wall 130. The partition wall 118 is positioned between the covers 120 forming the top wall and base wall. For instance, the partition wall 118 is positioned along height H between a top lip 109A and a bottom lip 109B of the sidewalls 108. The partition wall 118 may contour along various heights between the lips 109A, 109B, such as may be configured to alter a height of volumes 101, 102 formed between the partition wall 118 and respective covers 120. Referring to Figs. 3-4, perspective bottom-up views of an embodiment of the cassette 100 is provided. Embodiments of the cassette 100 include a pair of covers 120, such as a bottom cover 120B forming the base wall and a top cover 120A forming the top wall. The cover 120 includes a symmetrical configuration allowing the same cover configuration to be positioned as the top wall and the base wall.

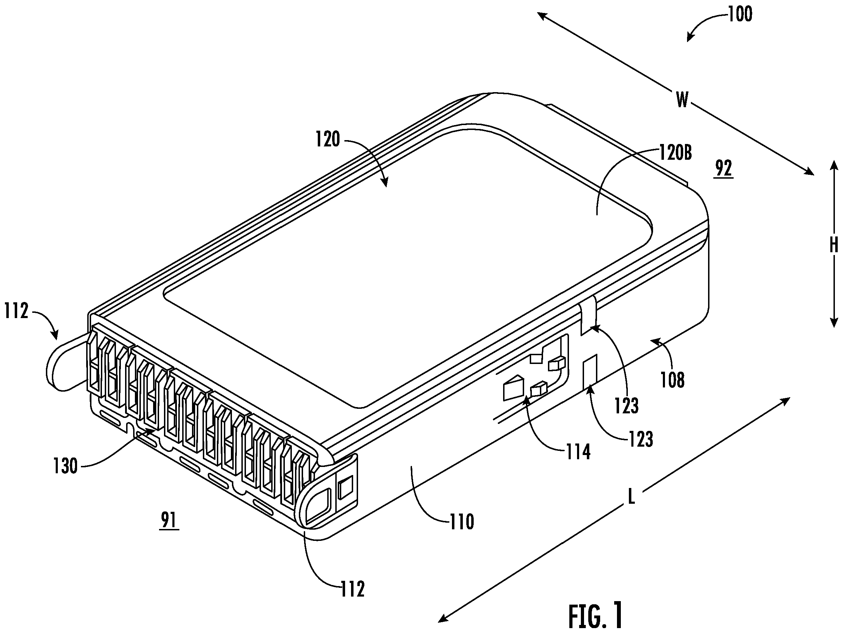

Referring to Figs. 1-4, in various embodiments, the cover 120 includes a latch 122 configured to selectively attach and release at a latch interface 123 at the sidewall 108. Configurations of the cover 120 including the latch 122 and the main body 110 including the latch interface 123 may obviate a requirement for a mechanical fastener (e.g., screws, nuts, bolts, threaded shanks, etc.) to retain a cover to a body. For instance, the latch interface 123 may form a groove, raised wall, or other surface at which the latch 122, such as forming a clip, may selectively attach and release the cover 120 from the sidewall 108.

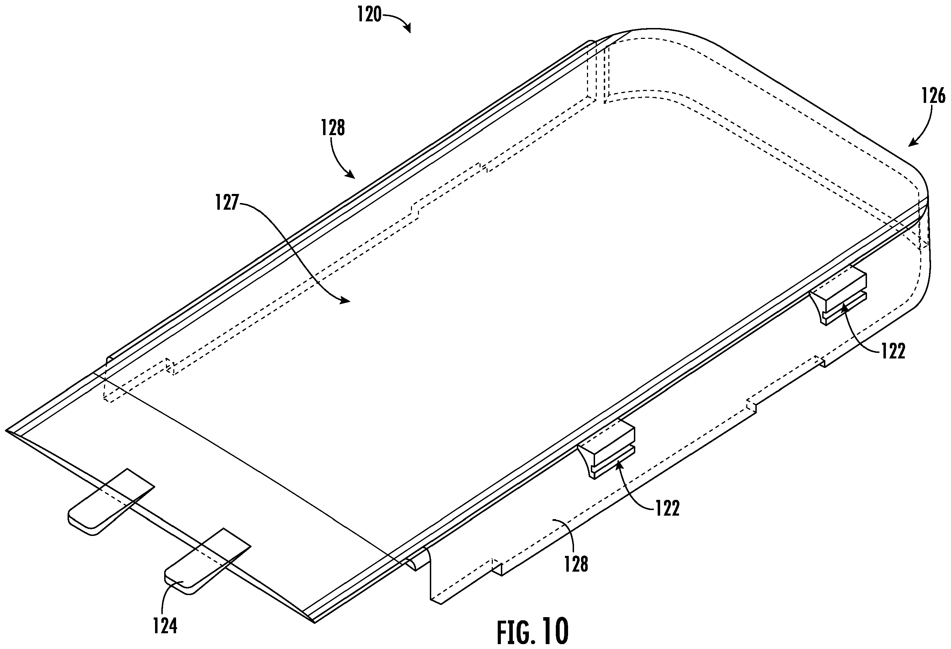

Referring briefly to Fig. 10, a perspective view of an embodiment of the cover 120 is provided. Embodiments of the cover 120 may include a body having sidewalls 128 and end wall 126 extending along height H (e.g., corresponding to sidewalls 108 and end wall 106, respectively). The cover 120 includes a face 127 extending along the length L and width W from which the sidewalls 128 and end wall 126 extend. The cover 120 may be formed, at least in part, from a transparent material. For instance, the face 127 may be formed from a transparent material, such as, but not limited to, a plastic material, such as to allow a user to view into volumes 101, 102 described below.

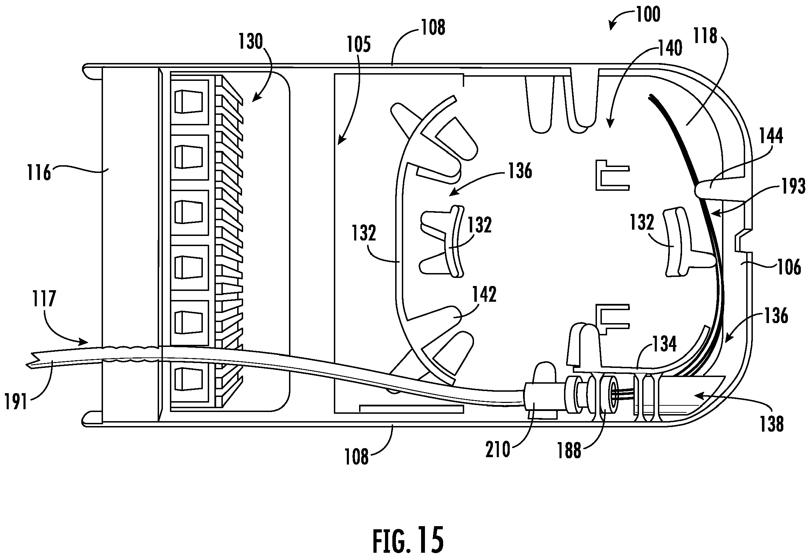

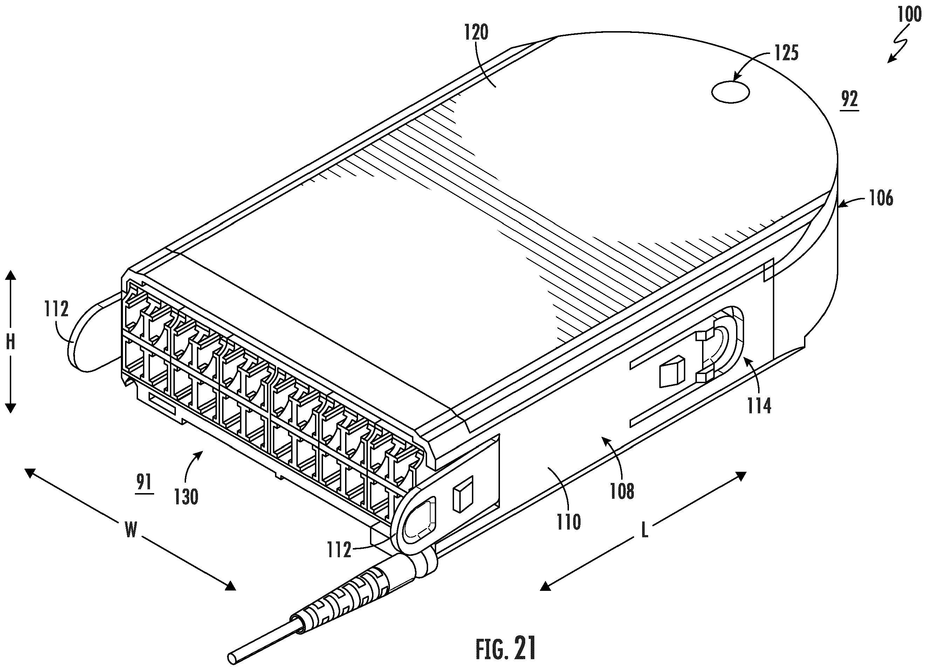

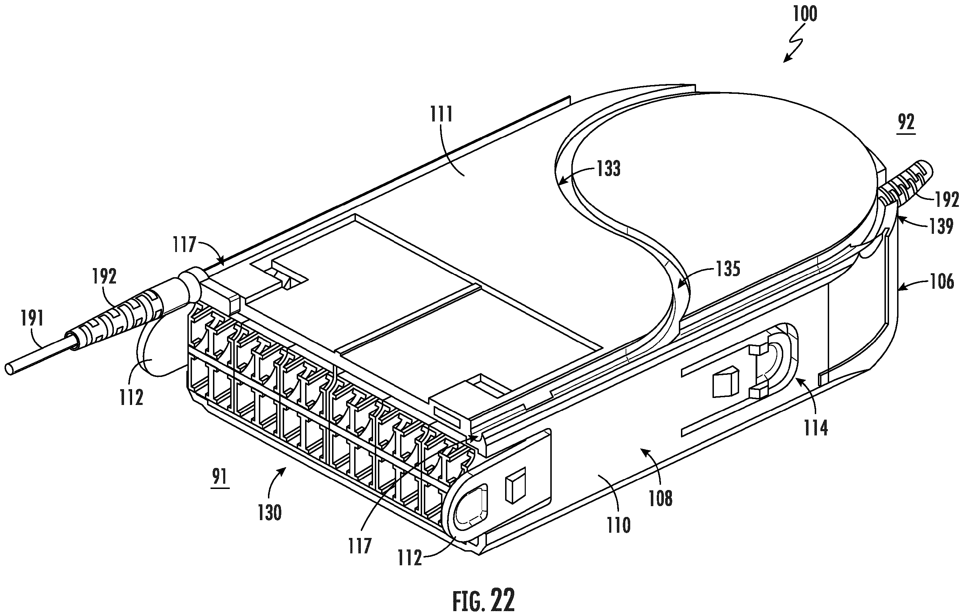

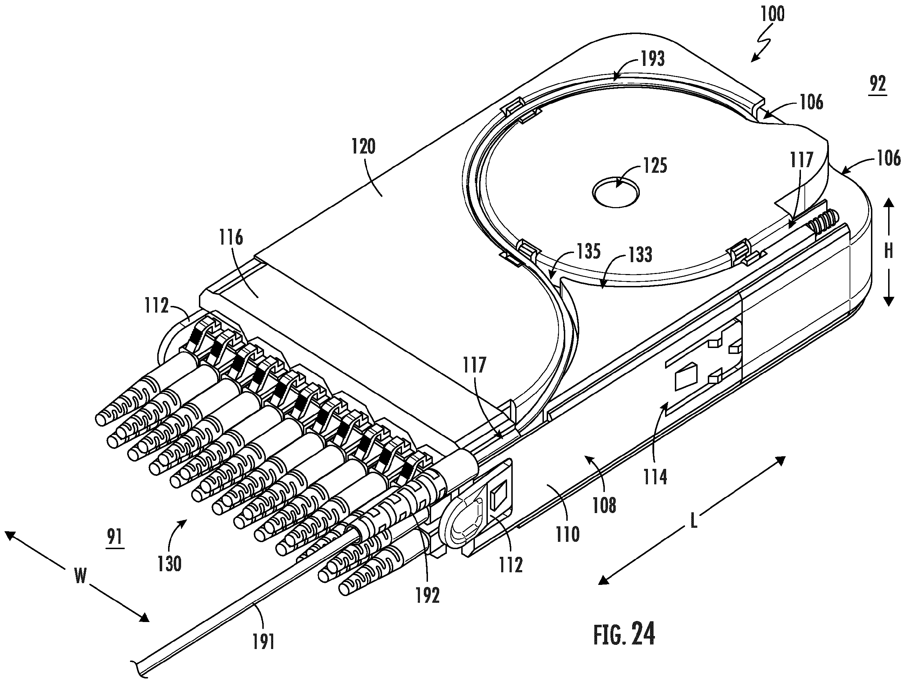

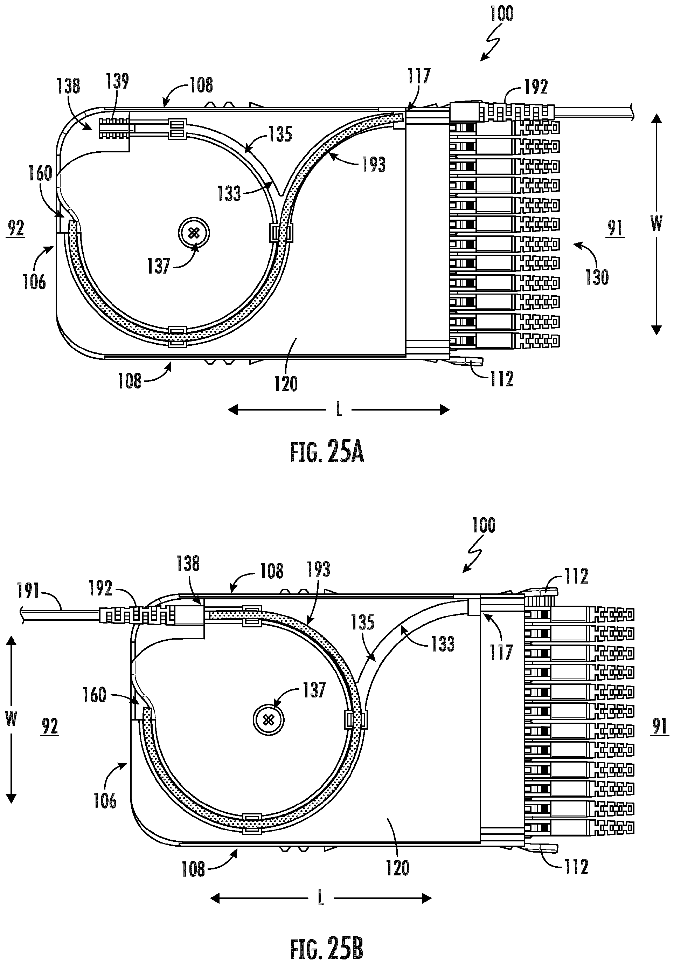

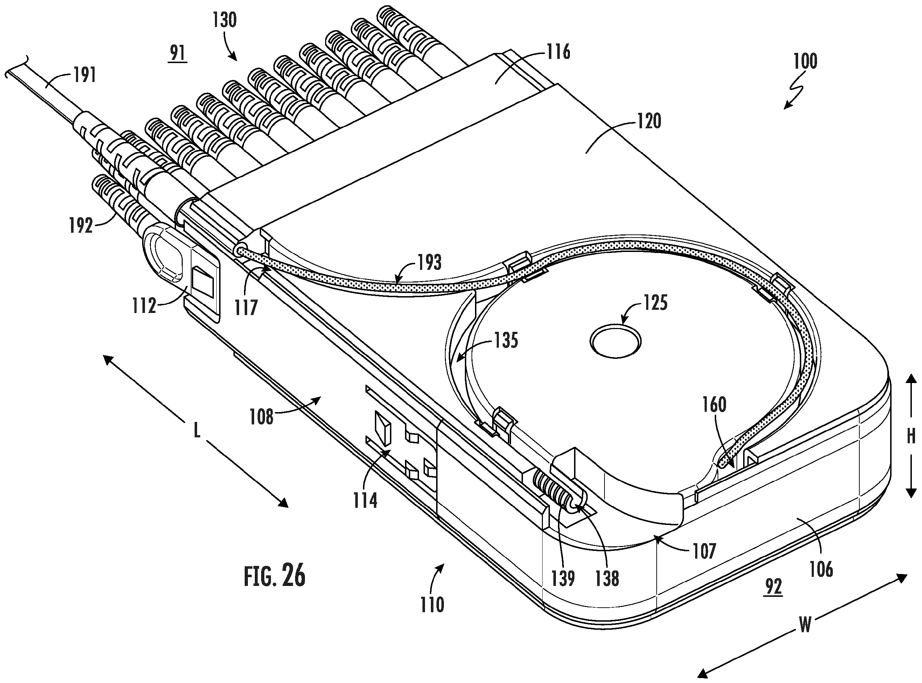

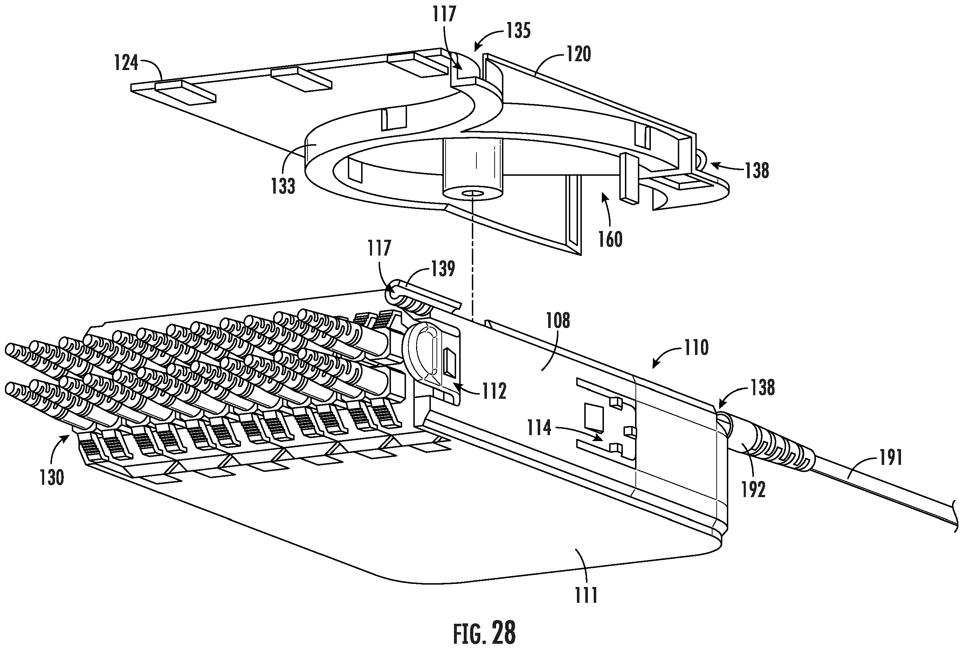

In still various embodiments, an adapter base wall 116 extends along the width W between the sidewalls 108 and partially along length L corresponding to the adapter wall 130. For instance, the adapter wall 130 may form a bank of a plurality of adapters positioned between a pair of adapter base walls 116. For instance, referring to Fig. 2, a first adapter base wall 116A extends between sidewalls 108 from a top portion (e.g., top lip along height H) of the sidewall 108. Referring to Fig. 3, a second adapter base wall 116B extends between sidewalls 108 from a bottom portion (e.g., bottom lip along height H) of the sidewall 108. In various embodiments, a cable entry passage 117 is formed at the adapter base wall 116. The passage 117 extends substantially along length L to allow an external cable to enter an internal volume of the cassette 100, such as further described herein and depicted in regard to Fig. 15. In still various embodiments, the passage 117 is formed at the cover 120, such as depicted in Figs. 21-28, Figs. 29A-29B. In some embodiments, the passage 117 may be formed at least partially at the adapter base wall 116 and the cover 120 and form a cable entry opening to a routing passage 135 at the cover 120, such as further described herein.

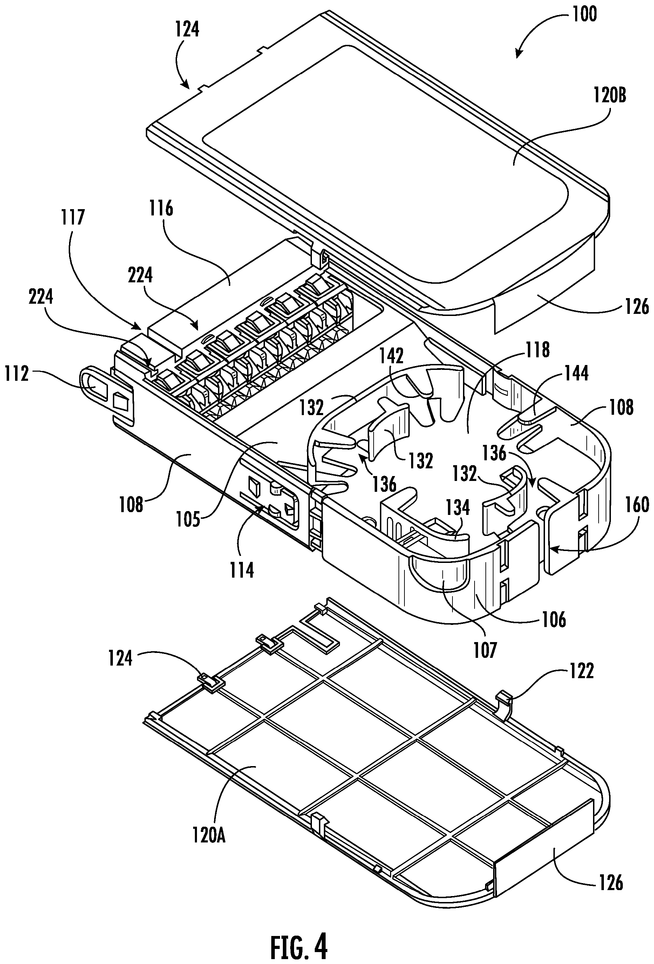

Referring to Fig. 4, in some embodiments, the adapter base wall 116 forms an opening 224 configured to receive a pin 124 extending from the cover 120. The pin 124 may form a locating pin configured to position the cover 120 relative to the main body 110, such as to position the cover 120 as a lid over internal areas extending between the sidewalls 108, adapter wall 130, and end wall 106.

In various embodiments, the cover 120, sidewalls 108, end wall 106, adapter wall 130, and partition wall 118 form a volume at which splices, leads, pre-terminated fibers, and other operable components are stored and secured. Referring to Fig. 2, a first volume 101 is formed between the sidewalls 108, end wall 106, adapter wall 130, a first side of the partition wall 118, and top cover 120A. Referring to Fig. 3, a second volume 102 is formed between the sidewalls 108, end wall 106, adapter wall 130, a second side of the partition wall 118, and bottom cover 120B.

In some embodiments, the partition wall 118 includes a transition wall 105 extending along height H. The transition wall 105 may form a ramp contouring from proximate to the top lip 109A to proximate to the bottom lip 109B. The transition wall 105 is positioned along length L between the adapter wall 130 and a fiber slack storage area 140. For instance, the storage area 140 may be positioned along the length L proximate to the end wall 106 (e.g., distal along length L to the adapter wall 130). The storage area 140 forms an area at respective volumes 101, 102 at which fiber leads, excess fiber, or fiber slack is arranged, positioned, and retained.

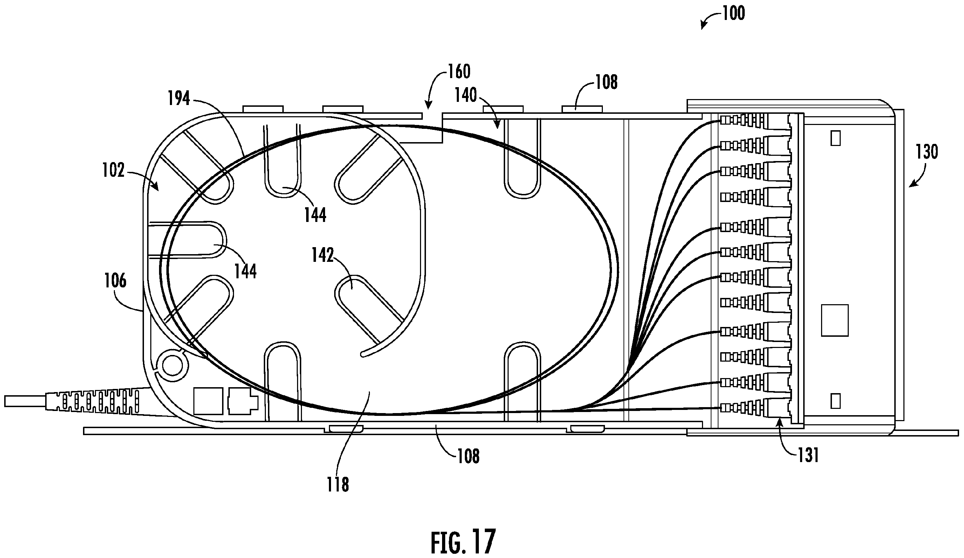

In various embodiments, the transition wall 105 may extend along the height H to position fiber optic adapters 131 extending into the first volume 101 or the second volume 102. For instance, the transition wall 105 may substantially position an internal portion of the fiber optic adapters 131, and fiber leads 194 extending therefrom, into the first volume 101 or the second volume 102. For instance, referring to Fig. 17, the transition wall 105 may position the fiber leads 194 extending from the fiber optic adapters 131 into the second volume 102, and the transition wall 105 may substantially segregate the fiber leads 194 from the first volume 101. However, it should be appreciated that an opening may be formed through the partition wall 118 proximate to the transition wall 105, such as to allow for fiber leads to extend between volumes 101, 102.

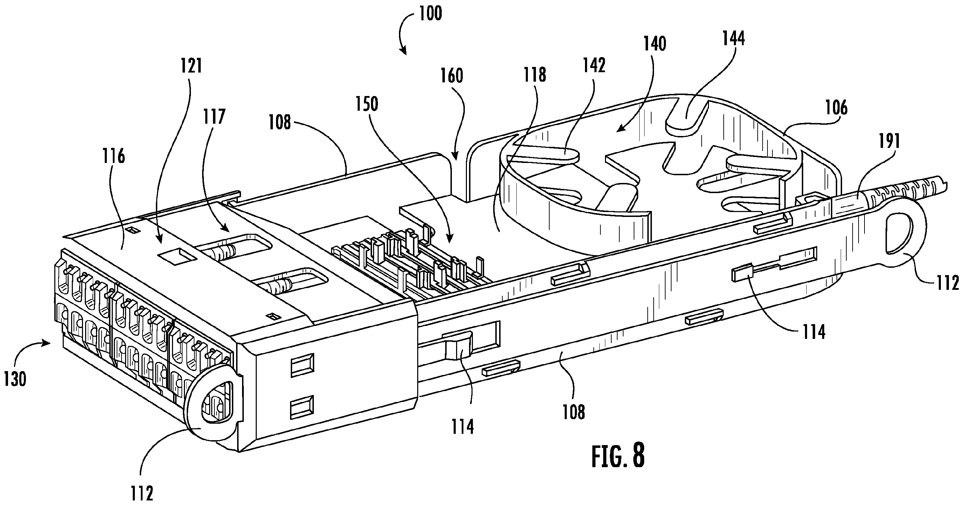

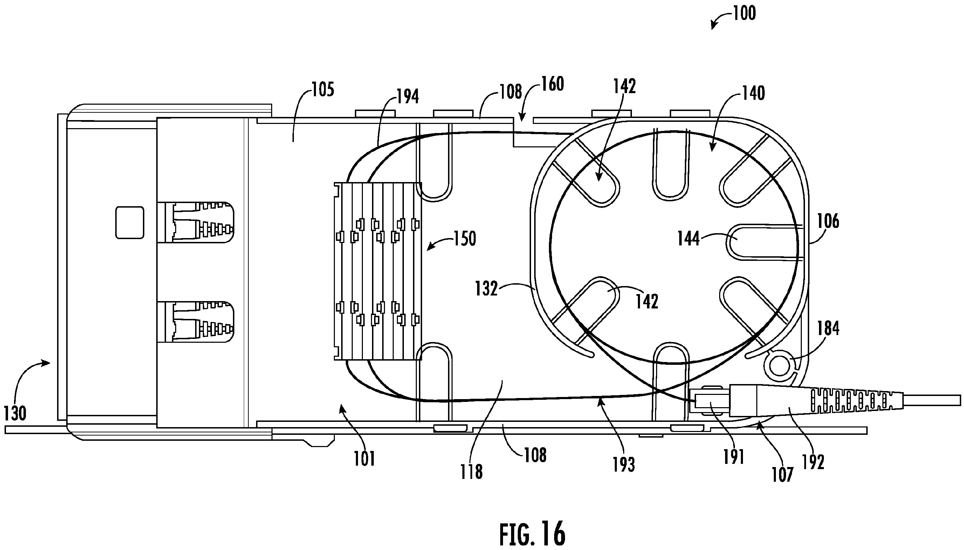

Referring at least to Figs. 2-4, Figs. 6-8, and Figs. 16-17, embodiments of the storage area 140 include an internal wall 132 partially partitioning the storage area 140 at which fiber leads may extend, wound, affix, or arrange (e.g., in loops, racetracks, figure-eight formation, etc.), such as depicted at Figs. 16-17. For instance, the internal wall 132 may extend along height H from the partition wall 118 at each of volumes 101, 102. A tab 142 extends from the internal wall 132, such as parallel to the partition wall 118, or forming a hook, arc, finger, or other member at which fiber leads are restrained or confined to the storage area 140. In some embodiments, a tab 144 extends into the volume 101, 102 from sidewall 108, end wall 106, or both.

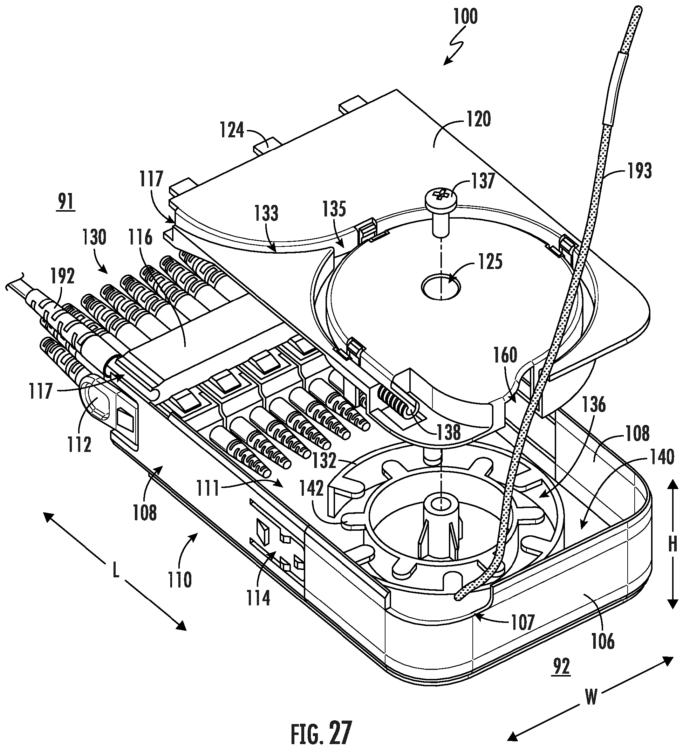

Referring to Figs. 2-4, Fig. 23, and Fig. 27, in some embodiments, internal walls 132 form a passage 136 through which fiber leads may extend and arrange. For instance, a pair or more of internal walls 132 may form the passage 136 as a walled racetrack or conduit through which fiber leads may be positioned. In still some embodiments, the passage 136 is formed between the internal wall 132 and one or more of the end wall 106, the sidewall 108, or both. Tab 142 may extend into the passage 136, such as may extend from one or more internal walls 132 forming the passage 136, or between the internal wall 132 and the end wall 106 or sidewall 108. For instance, tab 142 may extend at least partially parallel to a plane formed by the partition wall 118 or base wall 111 (Fig. 27).

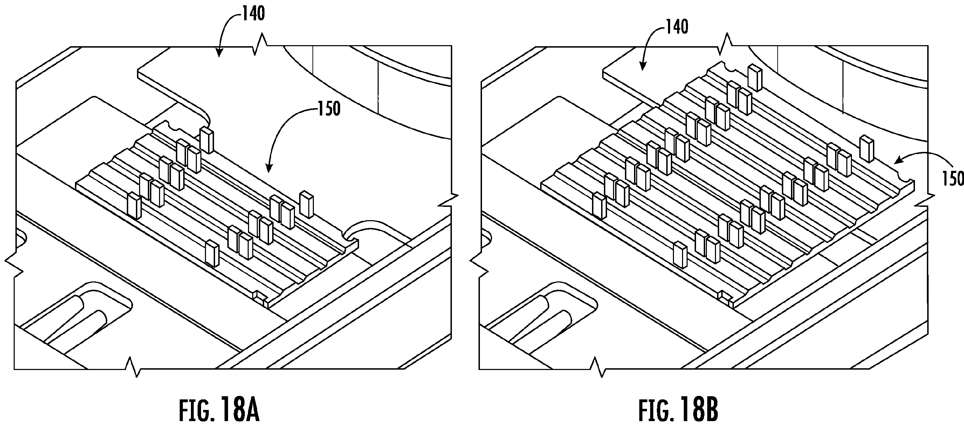

In various embodiments, a splice holder 150 is selectively positioned at one or both volumes 101, 102. Referring briefly to Figs. 18A-18B, the splice holder 150 may be configured for fiber ribbon slack (e.g., Fig. 18A) or discrete fiber leads (e.g., Fig. 18B). However, it should be appreciated that other configurations of splice holder 150 may be included at the storage area 140. In some embodiments, such as depicted at Fig. 2, the splice holder 150 is positioned within the storage area 140, such as adjacent to the end wall 106. In still some embodiments, such as depicted in Fig. 17, the splice holder 150 is positioned between the storage area 140 and the adapter wall 130, such as adjacent to the transition wall 105.

Embodiments of the cassette 100 facilitate and allow storage and organization of splice protection sleeves for splicing between internal pigtails (e.g., leads 194) and external cable 191. Various embodiments of the cassette 100 may include splice holder 150. The splice holder 150 may be configured for single discrete splices or multi-fiber ribbon splices, such as depicted at Figs. 18A-18B. Various embodiments of the main body 110 allow for an interchangeable modular splice holder 150 at which the single discrete splice or multi-fiber ribbon splice may be received.

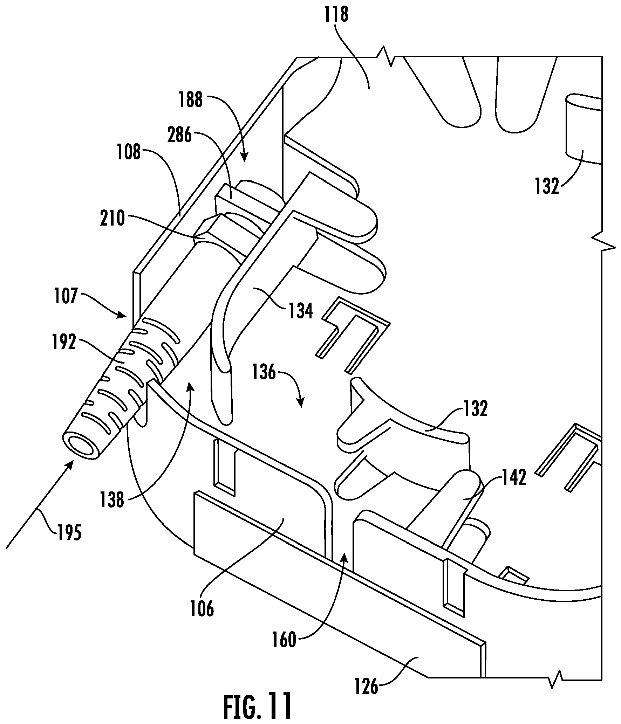

Referring now to Figs. 4, 6, and 11-12, and Figs. 26-27, a cable ingress/egress opening 107 is formed at the sidewall 108, the end wall 106, or a transition between the sidewall 108 and the end wall 106 (e.g., at a corner connecting the sidewall 108 and end wall 106). Embodiments of the cable ingress/egress opening 107 may be formed extending into the first volume 101 or the second volume 102. The opening 107 is configured to receive a cable 191 into the cassette 100. The cable 191 may include a boot 192 (e.g., a strain relief boot, cable bend relief boot, or other sleeve, covering, or outer material). An internal wall 134 may extend co-directional to a direction of extension (depicted schematically in Fig. 11 at arrow 195) of the cable 191 through the cable ingress/egress opening 107. The internal wall 134 and sidewall 108 may form a cable entry passage 138 through which the cable 191, the boot 192, or both are extended into the cassette 100. In some embodiments, a fastener 188 is selectively positioned at the cable 191 or the boot 192, such as to fasten, tie down, or otherwise retain the cable 191, or portions thereof, at the cable entry passage 138.

In various embodiments, such as depicted in Figs. 21-28, cable entry passages 117, 138 are formed at the first end 91 and the second end 92 along the length L. As described herein, cable openings or passages 117, 138 are formed to allow for front and/or rear entry of the cable 191 into one or more volumes or interior areas formed at the main body 110. In various embodiments, such as depicted in Figs. 21-28, the cover 120 is removably disposable onto the main body 110. The cover 120 includes a passage wall 133 at which a routing passage 135 extends from a first cable opening 117 at the first end 91 along the length L and a second cable opening 138 at the second end 92 along the length L. The routing passage 135 extends to a passthrough opening 160 extending through the cover 120 to the storage area 140 formed at the main body 110, such as depicted and described in various embodiments herein. In still various embodiments, the routing passage 135 may form a curved or serpentine routing passage 135, or, furthermore, branch off in a plurality of sections from the cable openings 117, 138.

Referring still to Figs. 21-28, the storage area 140 is formed at an interior of the main body 110 formed between the pair of sidewalls 108, the end wall 106, and the adapter wall 130 at the main body 110. The storage area 140 may generally include an internal wall 132, or additionally, tabs 142, extending along height H from a base wall 111 toward the cover 120. In some embodiments, base wall 111 may be integrally formed with the main body 110, such as integral with the sidewalls 108 and end wall 106. In still some embodiments, base wall 111 may be formed separately, such as a removable cover 120A, 120B, such as depicted and described in regard various embodiments herein.

Referring to Fig. 21 and Figs. 23-28, in some embodiments, the cover 120 and the main body 110 include a fastener opening 125, 129 configured to receive a fastener 137 to secure the cover 120 to the main body 110. The fastener 137 may include any appropriate type of mechanical fastener, such as, but not limited to, a screw, bolt, tie rod, or threaded shank, or a snap, latch, clip, or other desired type of mechanical coupling. The fastener openings 125 at the cover 120 may be configured to receive the fastener 137 thereinto, or therethrough, and extend into the fastener opening 129 at the main body 110. The fastener opening 129 at the main body 110 may be formed from a post, cylinder, or standoff, or other surface configured to receive the fastener 137. For instance, the fastener opening 129 may be formed at the storage area 140 at the main body 110. In still another instance, the internal walls 132 may be arranged to form the passage 136 extending around the fastener opening 129, such as depicted in Fig. 27. In some embodiments, the fastener opening 129 may include threads or other surface to receive threads at a threaded fastener. In still some embodiments, the fastener opening 129 may include raised surfaces at which a snap, latch, clip, etc. may adhere to. Various such configurations may facilitate compact arrangement of the releasably attachable cover 120 to the main body 110, the passages 135, 136 through which the cable 193 is extendable from the first or second ends 91, 92, and storable at the interior volume at the main body 110.

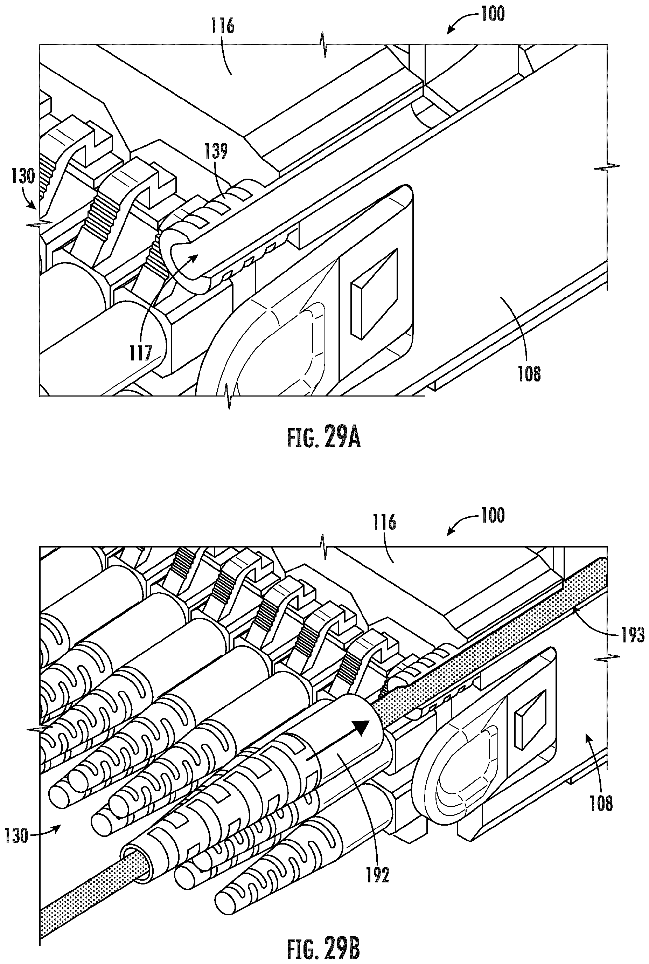

Referring to Figs. 21-28, and further depicted in detail at Figs. 29A-29B, in various embodiments, a cable retention interface 139 is positioned at the first cable opening 117, the second cable opening 138, or both. The cable retention interface 139 may generally be configured to receive a cable bend relief boot 192 of the cable 191. The cable retention interface 139 may be configured to retain the boot 192 and facilitate routing fibers 193 from the boot 192 and into the routing passage 135. In some embodiments, the cable retention interface 139 forms an arcuate opening through which the cable 191 or fibers 193 is extendable.

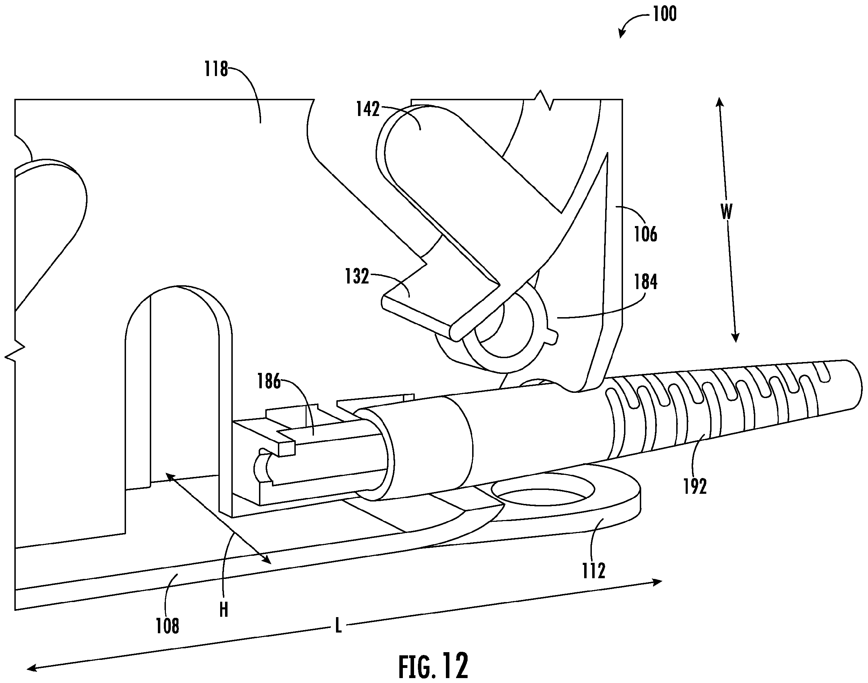

Referring to Fig. 12, in some embodiments, a fastener mount location 186 is formed extending along the direction of extension 195 (Fig. 11) of the cable 191 through the opening 107. For instance, the fastener mount location 186 may be formed at the passage 138. The fastener mount location 186 may form a groove at which cable 191 (or fibers thereof) may be received and positioned. The fastener 188 may be positioned around the cable 191, or portions thereof, at the fastener mount location 186. In some embodiments, the fastener mount location 186 forms a jacket strip or tie point at which fibers from the cable 191 are exposed within the cassette 100 and retained thereto. In still some embodiments, a tie point 184 is formed alongside the opening 107. For instance, the tie down point 184 may form a cable strength member tie point or other location at which a strength member of the cable 191 is affixed.

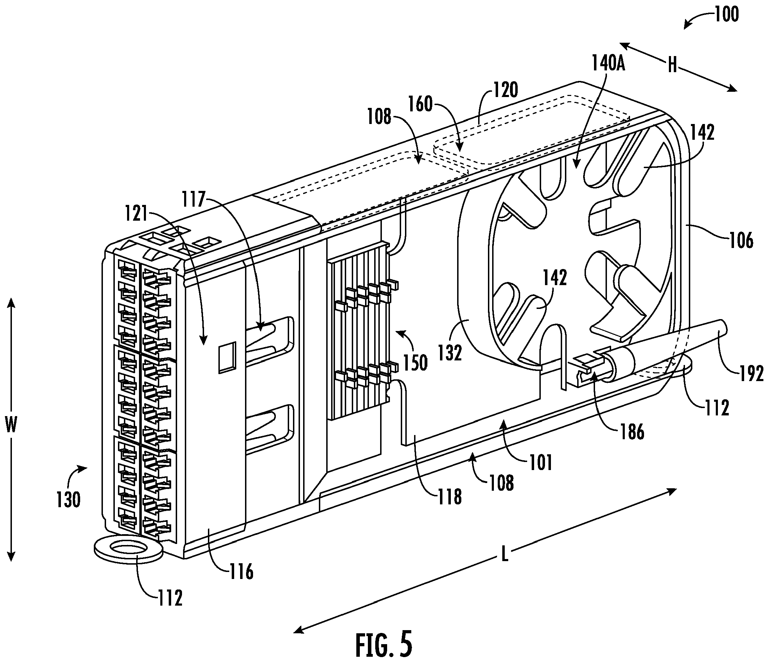

Referring to Fig. 5, a perspective view of an embodiment of the cassette 100 is provided. The perspective view provided in Fig. 5 and the plan view provided in Fig. 16 show the first volume 101 having a first storage area 140A. The first volume 101 may be configured to receive an external cable 191 through cable ingress/egress opening 107. The first storage area 140A may include internal walls 132 and tabs 142, 144 configured to receive fiber 193 (Fig. 16) from the external cable 191. The fiber 193 may be routed, wound, or otherwise arranged between tabs 142, 144 and the partition wall 118 and within the storage area 140A formed between internal walls 132, or furthermore between one or more sidewalls 108 or end wall 106. Fiber 193 is routed to the splice holder 150 at which splice protection sleeves may be positioned and affixed to the cassette 100. Fiber optic pigtails or splice fiber leads 194 extend from the splice holder 150. A passthrough opening 160 is formed through the partition wall 118 to allow the fiber leads 194 to egress from the first volume 101 to the second volume 102. In some embodiments, the passthrough opening 160, or a portion thereof, is formed through the sidewall 108 adjacent to the portion at the partition wall 118. In still some embodiments, such as depicted at Figs. 3-4, the passthrough opening 160, or a portion thereof, is formed through the end wall 106 adjacent to the portion at the partition wall 118.

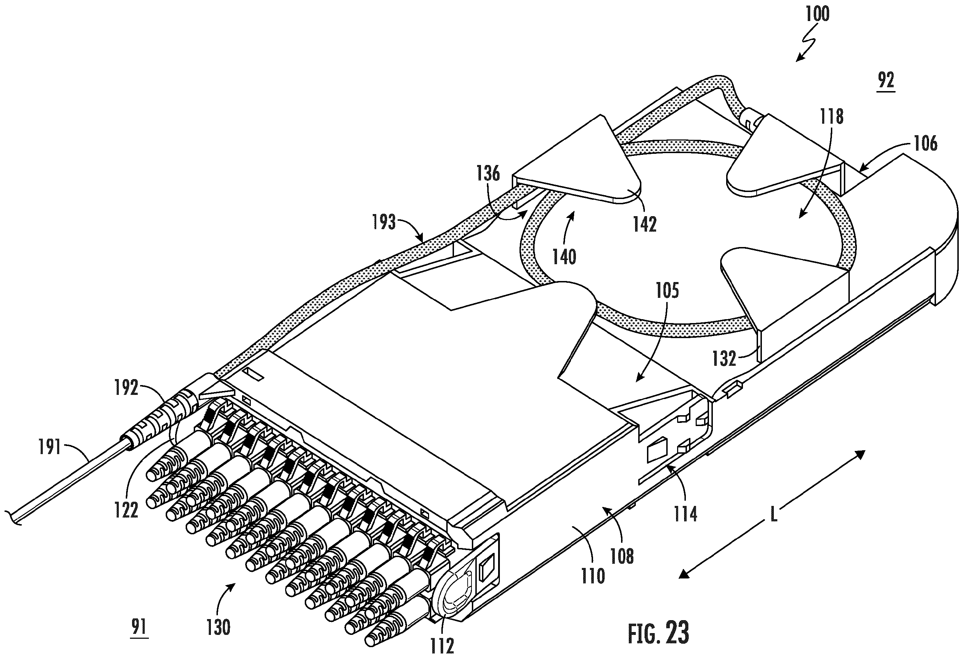

In still yet some embodiments, such as depicted in Fig. 23, the internal wall 132 extends from the partition wall 118 from an exterior volume, such as a base wall of the main body 110. The storage area 140 may be formed adjacent to the partition wall 118 and the fiber 193 may wrap or wind between the partition wall 118 and tabs 142.

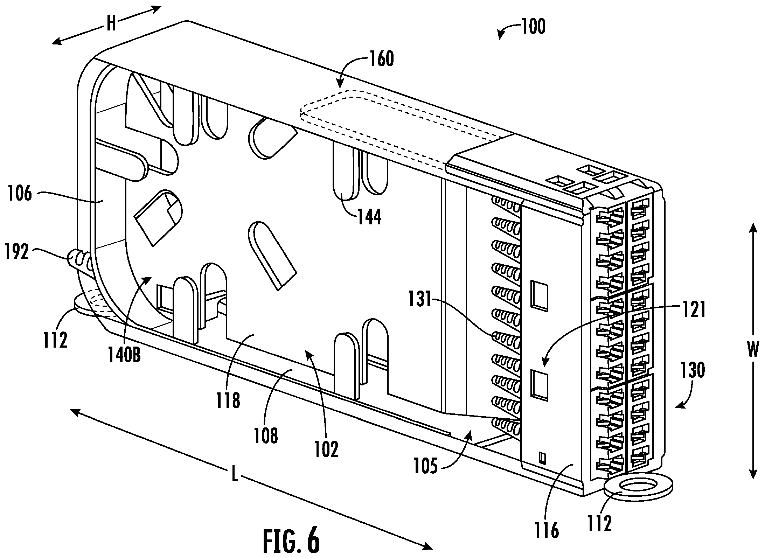

Referring to Fig. 6, a perspective view of an embodiment of the cassette 100 is provided. The perspective view provided in Fig. 6 and the plan view provided in Fig. 17 show the second volume 102 having a second storage area 140B. The second volume 102 may be configured to receive the fiber leads 194 from the first volume 101 (depicted in Figs. 5 and 16) through the passthrough opening 160. Fiber leads 194 may be routed, wound, or otherwise arranged between tabs at the second storage area 140B. Fiber leads 194 may terminate at fiber optic adapters 131 at the adapter wall 130. For instance, fiber optic adapters 131 may extend into the second volume 102 to allow for fiber leads 194 to extend therefrom.

Embodiments of the cassette at Figs. 5 and 16 may depict the first volume 101 as a cable tie-off or splicing region. Embodiments of the cassette 100 at Figs. 6 and 17 may depict the second volume 102 as an optical fiber pigtail slack storage and termination region. The cassette 100 may include a blanking plate fitted and retained to cover the cable ingress/egress opening 107 when cables are routed out of a first end 91 (e.g., front end along length L) of the cassette 100. The main body 110 may include the fiber passthrough opening 160 positioned at a second end 92 (e.g., rear end along length L) or along a side (e.g., along sidewall 108) of the cassette 100. The fiber passthrough opening 160 may allow routing between the first volume 101 forming an inbound cable slack storage area and the second volume 102 forming an internal pigtail slack storage area. In various embodiments, the splice holder 150 forms a splice sleeve organization area positioned at the first volume 101 (e.g., such as depicted at Figs. 3-4) or at the second volume 102 (e.g., such as depicted at Figs. 5-6).

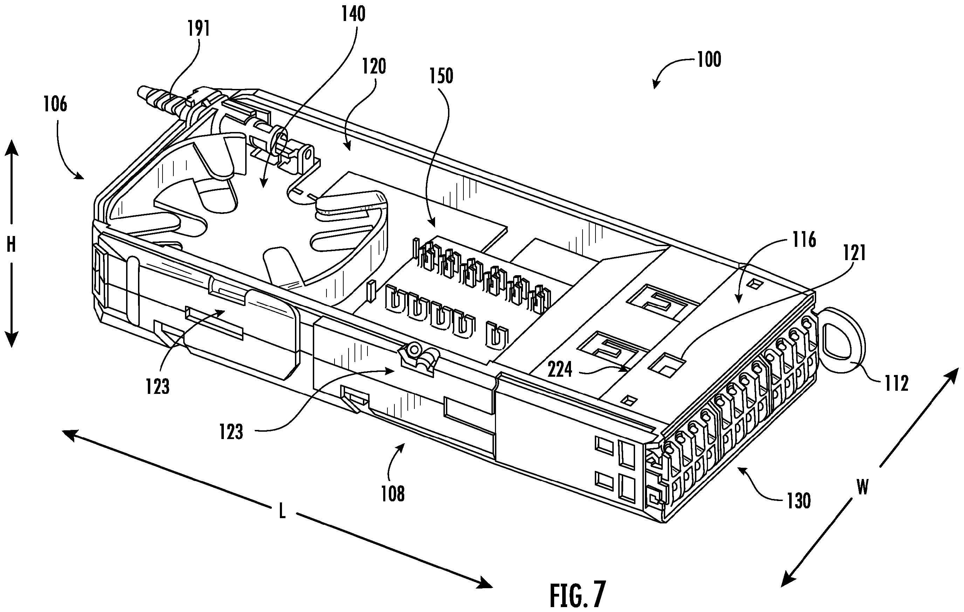

Figs. 7-8 depict perspective views of an embodiment of the cassette 100. The cover 120 and main body 110 may a release interface 121, such as a button or clip. The release interface 121 may be configured to allow a user to push to release the cover 120 from the main body 110. For instance, the release interface 121 may be positioned at the adapter base wall 116. In various embodiments, a user may push the release interface 121 and translate the cover 120 along the length L toward the end wall 106, such as to remove pin 124 from opening 224. The user may translate the cover 120 up along the height H (i.e., away from the main body 110) to remove the cover 120, such as to remove the latch 122 from the latch interface 123. For instance, the latch interface 123 may form a slot extending along the length L, such as to allow for translation of the cover 120 and latch 122 along the length L.

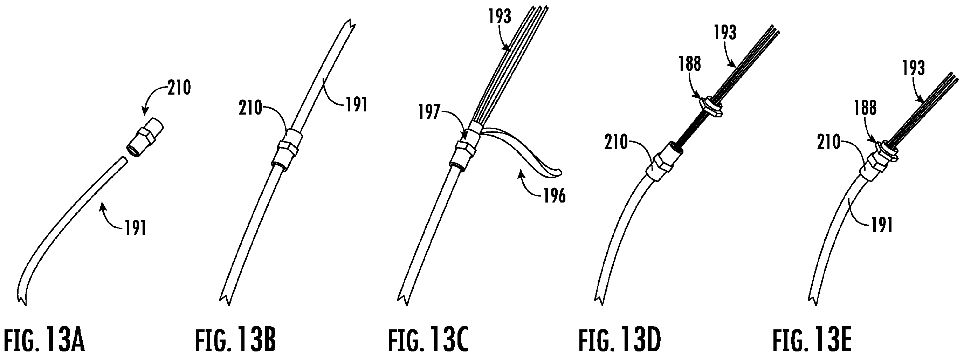

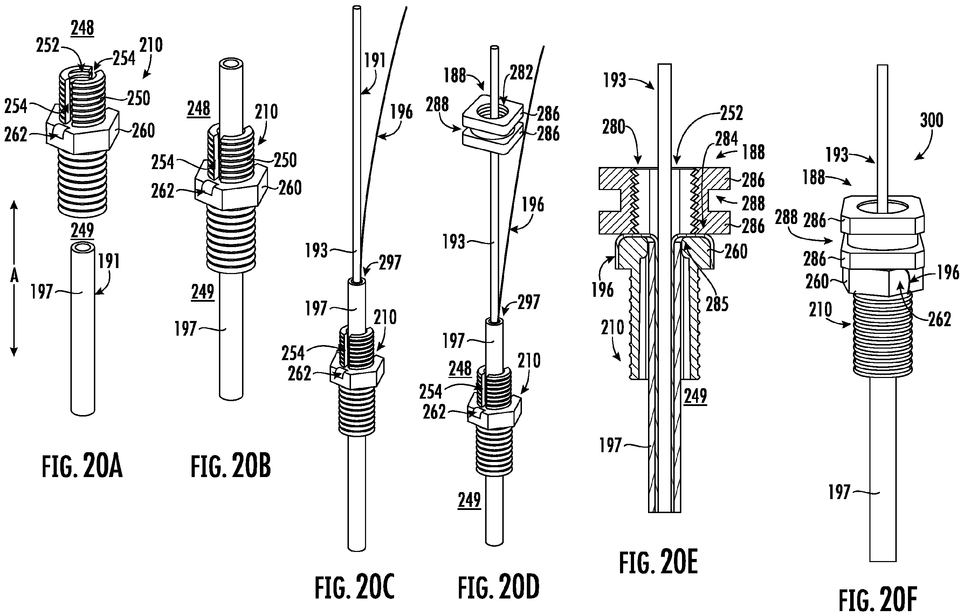

Referring now to Figs. 13A-13E and Figs. 20A-20F, in various embodiments, external cable 191 is affixed to the main body 101 using a collar 210 (e.g., a threaded collar) extending around the cable 191, such as including outer jacket 197, fiber 193 and strength member 196 (e.g., aramid or e-glass strength member), and locked in place with fastener 188 (e.g., a nut or other appropriate retainer). A method for assembly may include inserting the cable 191 through the collar 210. The method includes locking the cable 191, such as including fiber 193 and strength member 196, in place with fastener 188. The method may include fitting and/or retaining the fastener 188 onto the main body 110. For instance, the fastener 188 may be affixed to the main body 110 at the passage 138 or fastener mount location 186.

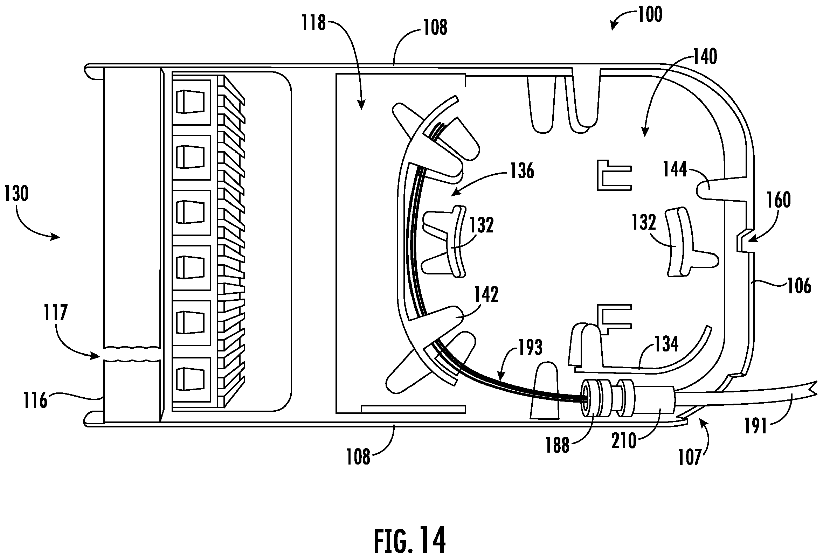

Referring to Figs. 14-15, plan views of embodiments of the cassette 100 are provided. Embodiments depicted in Figs. 14-15 may be configured substantially such as depicted and described in regard to perspective views of the cassette 100 at Figs. 3-4. Fig. 14 depicts an embodiment at which the cable 191 is extended into the cassette 100 through cable ingress/egress opening 107, such as described herein. Fig. 15 depicts an embodiment at which the cable 191 is extended into the cassette 100 through passage 117. For instance, Fig. 14 may depict a method for routing in which cable 191 extends into the cassette 100 through a rear end (e.g., through opening 107) and Fig. 15 may depict a method for routing in which cable 191 extends into the cassette 100 through a front end (e.g., through passage 117). The cable 191 can be fitted at the fastener 188, fastener mount location 186, or passage 138 from either front or back, such as to accommodate front or rear entry/exit of the cable 191. In still various embodiments, a cable bend relief boot (e.g., boot 192) can be used to help reduce cable bend stress as the cable 191 exits the cassette 100.

It should be appreciated that "rear" and "front" may be relative to a datarack or other cassette mounting apparatus. Embodiments of the cassette 100 such as described herein may provide an apparatus allowing for front and rear external cable entry, such as to facilitate and improve accessibility, maintenance, routing, and splicing fibers and cassettes at dataracks.

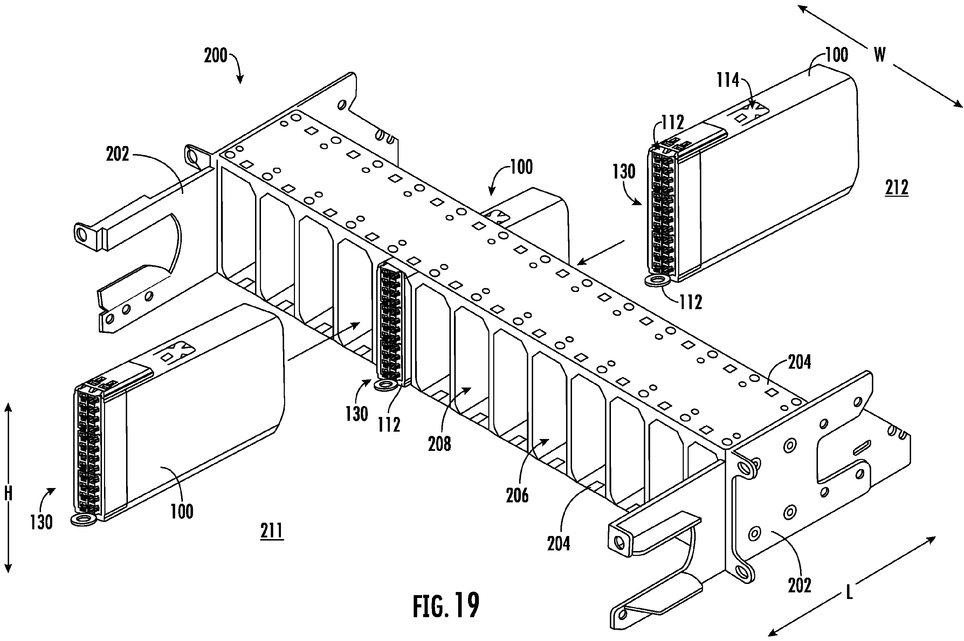

Referring now to Fig. 19, a perspective view of an embodiment of a datarack chassis 200 is provided. The chassis 200 is configured to receive and retain one or more cassettes 100. Embodiments of the cassette 100 are mountable to chassis 200 that is mountable to a datarack. Various embodiments of the chassis 200 and datarack may include industry-standard configurations (e.g., 48 cm (19 inch), 53 cm (21 inch), 58 cm (23 inch), etc. industry standard width racks), or customizable-width configurations. The cassette 100, the chassis 200, or both, may include a depressible latch 112 configured to releasably retain the cassette 100 to the chassis 200. The latch 112 may allow the cassette 100 to be inserted to or removed from the chassis 200 from either a front end 211 or a rear side 212 of the chassis 200 or datarack.

In various embodiments, the latch 112 may be removable or positioned at the chassis 200. The latch 112 may be retained onto the sidewalls 108 at latch attachments 114 at an outside face of the sidewalls 108. The latch 112 may be retained onto the cassette 100 when the cover 120 is removed from the main body 110.

Referring now to Figs. 20A-20F, embodiments of a fiber fastener assembly 300 and method for cable retention are provided. The fastener assembly 300 includes embodiments of the collar 210 and fastener 188. In various embodiments, the cable 191 includes outer jacket 197, fiber 193 and strength member 196 (e.g., aramid or e-glass strength member), such as may be included with fiber optic cable assemblies. The collar 210 includes a threaded shank 250 extending from one or both directions along an axial direction A from a platform 260. The platform 260 may form a head, such as a polygonal (e.g., hexagonal, or other multi-faceted body). The threaded shank 250 includes a passage 252 formed therethrough to allow the cable 191, or portions thereof, to extend through the threaded shank 250. Passage 252 may extend between and ends 248, 249 of the collar 210 separated along the axial direction A. For instance, the collar 210 extending around the outer jacket 197 has the threaded shank 250 extending co-directional to an extension of the outer jacket 197 along the axial direction A. A first end 248 may form an end through which the cable 191 egresses from the collar 210. A second end 249 may form an end through which the cable 191 enters into the collar 210 to then egress from the first end 248.

Referring particularly to Fig. 20A, the collar 210 includes a slot 254 extending along the axial direction A. The slot 254 may extend from the first end 248, such as to extend from the exit end of the collar 210 toward the platform 260. The slot 254 extends through the threaded shank 250, such as to allow for a portion of the cable 191 to extend from the passage 252 internal to the collar 210 to external from the collar 210. In various embodiments, a method for cable retention includes extending the strength member 196 through the slot 254, such as to allow for space or separation of the strength member 196 from the fiber 193 exiting the passage 252 at the first end 248.

Referring to FIGS. 20D-20F, embodiments of the fastener 188 may form a nut including an internally threaded passage 282 configured to engage the outer threads of the threaded shank 250 at the collar 210. As depicted in Fig. 20E, the threads may together mate at a threaded interface 280 (Fig. 20E) extending from the platform 260 toward the end (e.g., first end 248) of the collar 210.

In various embodiments, the fastener 188 includes one or more radially extending platforms 286. The radially extending platforms 260, 286 have a flat radially extending interface 284 between the platforms 260, 286, such as to allow the fastener 188 to rest flush or substantially flush to the collar 210 at the platforms 260, 286. In some embodiments, a groove 288 is formed between a pair of platforms 286, such as to allow a tab, member, bracket, or other feature at a casing or body to extend into the groove 288 to retain the assembly 300 to the casing or body.

In still various embodiments, the collar 210 includes a groove 262 formed at the platform 260. The groove 262 extends along platform 260 at the interface 284, such as to allow a portion of the cable 191, such as the strength member 196, to extend into the groove 262, such as depicted in Fig. 20E. A method for cable retention may include separating the strength member 196 from the fibers 193 and extending the strength member 196 along groove 262. The method may include threading the fastener 188 onto the threaded shank 250 to position the platforms 260, 286 flush or substantially flush to one another. The strength member 196 extending through the groove 262 may allow the platforms 260, 286 to abut one another flush at the interface 284. Curved edges 285 at the platform 260 may further facilitate extension of the portion of the cable 191 into the groove 262 while preventing shearing of the portion of the cable 191 (e.g., the strength member 196). The method may include separating the strength member 196 from the fiber 193 via routing the strength member 196 through the groove 262 and the fibers 193 from the passage 252 at the first end 248. Accordingly, the groove 262 may allow the fibers 193 to egress from the passage 252 through the first end 248 and allow the strength member 196 to egress from the passage 252 through the groove 262, such as to facilitate separation, handling, splicing, and access to the fibers 193 and mitigate interference from other portions of the cable 191.

Still various embodiments of the method may include positioning an end 297 of the outer jacket 197 within the passage 252. For instance, a user may extend the cable 191 through the passage 252 and egress through end 248, such as depicted from Fig. 20A to Fig. 20B. The user may cut or otherwise separate the outer jacket 197 to access fibers 193, strength members 196, or other portions of the cable 191 within the outer jacket 197, such as depicted at Figs. 20C-20D. The user positions the fastener 188 around the fibers 193, such as through passage 282 as depicted in Fig. 20D. The strength member 196 extends around fastener 188, such as to bypass passage 282 through which the fibers 193 are extended. The user may re-position the end 297 of the outer jacket 197 (e.g., the end 297 formed from cutting or otherwise accessing the fibers 193 within the outer jacket 197) into the passage 252 at the collar 210, such as depicted from Fig. 20D to Fig. 20E. In various embodiments, the strength member 196 is positioned through groove 262 to allow the platforms 260, 286 to abut flush against one another. In other embodiments, the strength member 196 is positioned through slot 254 to allow the strength member 196 to extend through first end 248 while allowing separation from the fibers 193 extending from the passage 252 at the first end 248.

In various embodiments, boot 192 may extend over the threaded shank 250 of the collar 210 from the second end 249 to the platform 286 at the fastener 188, such as depicted in Fig. 11.

In some embodiments, slot 254 extends from the platform 260 toward both the first end 248 and the second end 249, such that either end 248, 249 may form an egress end of the passage 252. In still some embodiments, groove 262 extends on either or both sides of platform 260, such as to correspond to an extension of the slot 254 toward either end 248, 249, such as to allow either end of passage 252 to form an egress end.

Embodiments of the assembly 300 provide structures and methods for cable retention to facilitate splicing and other work at the cable 191. Embodiments provided herein may mitigate shearing, crushing, stress buildup, or deterioration of portions of the cable 191. Groove 262 and slot 254 may facilitate separation of the strength member 196 from the fibers 193, such as to facilitate work performed at the fiber 193. Groove 262 may particularly promote routing and avoid damage to e-glass strength members or similar configurations. Slot 254 may particularly promote routing and avoid damage to aramid fiber strength members or similar configurations.

In an exemplary configuration of the cassette 100, cassette 100 allows for storage capacity of at least 1.5 meters length on 250 µm diameter fiber on internal fibers, external fibers, or both. For instance, the cassette 100 may include the first volume 101 and second volume 102 together having approximately 492 cubic cm (approximately 30 cubic inches) or less, or approximately 574 cubic cm (approximately 35 cubic inches) or less, or approximately 688 cubic cm (approximately 42 cubic inches) or less. It should be appreciated that lengths, widths, and heights of exemplary cassettes 100 may correspond to chassis 200 types such as described herein. Such configurations may provide desired cable length for servicing and maintenance, such as to perform splicing processes, facilitate use and length of cable, allow for re-splicing, etc. The cassette 100 is configured to storage desirable lengths and diameters of fiber within the volumes 101, 102, and furthermore within main bodies 110 and volumes 101, 102 allowing for a plurality of cassettes 100 to be insertable to chassis 200, such as described herein.

Embodiments of the optical fiber cassette 100, chassis 200, and datarack depicted and described herein may improve ease of use for a user (e.g., a splicer technician) by providing separate slack storage volumes 101, 102 and facilitating fault find and trace fiber when addressing issues or performing maintenance tasks. Embodiments provided herein allow for installation and removal of the cassette 100 without requiring tools, such as may reduce maintenance time and reduce risk of tools damaging fiber. Embodiments of the cassette 100 including a fastener 188, such as forming a locking nut, facilitating reduced cable installation time and allowing cables (e.g., cable 191) to be affixed to the cassette 100 without requiring screws, inserts (e.g., molded inserts), or other threaded mechanical fasteners. Fastener 188, such as forming a locking nut, may save space inside the main body and facilitate ease of handling and performing splicing or maintenance tasks.

Embodiments of the optical fiber cassette 100, chassis 200, and datarack may allow for front or rear access, such as may allow for servicing of the datarack when positioned against a wall or other obstruction. Embodiments provided herein facilitate use of discrete or ribbon splicing without changing configurations (i.e., discrete or ribbon splicing may be utilized at the same module), which may provide multiple configuration options at the same module.

Further aspects of the invention are provided by one or more of the following embodiments:
1. An optical fiber cassette, the cassette defining a mutually orthogonal length, width, and height, the cassette including a main body including a pair of sidewalls extending along the length and an end wall extending along the width between the pair of sidewalls, the sidewalls and the end wall each extending along the height, wherein an adapter wall between the sidewalls and positioned along the length distal to the end wall, wherein a partition wall extends between the sidewalls, the end wall, and the adapter wall, wherein the partition wall is positioned along the height between a top lip and a bottom lip of the sidewalls, wherein a first volume is formed at a first side of the partition wall between the sidewalls, the end wall, and the adapter wall, and wherein a second volume is formed at a second side of the partition wall between the sidewalls, the end wall, and the adapter wall, wherein a fiber storage area is positioned at the first volume and the second volume, and wherein a splice holder is positioned at the first volume or the second volume, wherein a cable opening is formed at or between the end wall and at least one sidewall, the cable opening configured to receive an external cable into the first volume, and wherein a passthrough opening is formed through the partition wall to allow for fiber egress from the first volume to the second volume.
2. The optical fiber cassette of any one or more clauses herein, wherein the adapter wall includes a plurality of adapters extending into the second volume.
3. The optical fiber cassette of any one or more clauses herein, wherein an adapter base wall extends along the width between the sidewalls and partially along the length, the adapter base wall positioned along the length at or proximate to the adapter wall.
4. The optical fiber cassette of any one or more clauses herein, wherein a cable entry passage is formed at the adapter base wall, the cable entry passage extending along the length, the cable entry passage configured to allow the external cable into the first volume.
5. The optical fiber cassette of any one or more clauses herein, the main body including a fastener mount location extending along a direction of extension of the external cable through the cable opening.
6. The optical fiber cassette of any one or more clauses herein, wherein the fastener mount location forms a groove configured to receive the external cable.
7. The optical fiber cassette of any one or more clauses herein, wherein the fastener mount location is configured to receive a collar extended around the external cable.
8. The optical fiber cassette of any one or more clauses herein, wherein the fastener mount location is configured to receive a fastener extended around the external cable.
9. The optical fiber cassette of any one or more clauses herein, wherein a tie point is formed alongside the cable opening, the tie point configured to affix a strength member of the external cable to the main body.
10. The optical fiber cassette of any one or more clauses herein, wherein the storage area includes a plurality of tabs extending at least partially parallel to the partition wall.
11. The optical fiber cassette of any one or more clauses herein, wherein the storage area includes an internal wall extending along the height from the partition wall, wherein a tab extends from the internal wall at least partially parallel to the partition wall.
12. The optical fiber cassette of any one or more clauses herein, wherein the passthrough opening is positioned alongside the end wall or the sidewall.
13. The optical fiber cassette of any one or more clauses herein, including a removeable cover forming a base wall and a top wall over the main body.
14. The optical fiber cassette of any one or more clauses herein, the cover including a latch configured to selectively attach and release at a latch interface at the sidewall.
15. The optical fiber cassette of any one or more clauses herein, the cover including a pin configured to extend into an opening at an adapter base wall.
16. The optical fiber cassette of any one or more clauses herein, the cover including a face extending along the length and width, wherein a cover sidewall and a cover end wall extends from the face along the height.
17. The optical fiber cassette of any one or more clauses herein, wherein the face includes a transparent material.
18. The optical fiber cassette of any one or more clauses herein, the sidewalls including a latch attachment at an outside face of the sidewalls.
19. The optical fiber cassette of any one or more clauses herein, the partition wall including a transition wall extending along the height, the transition wall positioned along the length between the adapter wall and the storage area.
20. The optical fiber cassette of any one or more clauses herein, wherein the main body is a unitary, monolithic component.
21. An optical fiber cassette, the cassette defining a mutually orthogonal length, width, and height, the cassette including a main body including a pair of sidewalls extending along the length and an end wall extending along the width between the pair of sidewalls, the sidewalls and the end wall each extending along the height, wherein an adapter wall between the sidewalls and positioned along the length distal to the end wall, wherein a partition wall extends between the sidewalls, the end wall, and the adapter wall, wherein the partition wall is positioned along the height between a top lip and a bottom lip of the sidewalls, wherein a first volume is formed at a first side of the partition wall between the sidewalls, the end wall, and the adapter wall, and wherein a second volume is formed at a second side of the partition wall between the sidewalls, the end wall, and the adapter wall, wherein a fiber storage area is positioned at the first volume and the second volume, and wherein a splice holder is positioned at the first volume or the second volume, wherein an adapter base wall extends along the width between the sidewalls and partially along the length, the adapter base wall positioned along the length at or proximate to the adapter wall, and wherein a cable entry passage is formed at the adapter base wall, the cable entry passage extending along the length, the cable entry passage configured to allow the external cable into the first volume, and wherein a passthrough opening is formed through the partition wall to allow for fiber egress from the first volume to the second volume.
22. The optical fiber cassette of any one or more clauses herein, wherein a cable opening is formed at or between the end wall and at least one sidewall, the cable opening configured to receive an external cable into the first volume.
23. An optical fiber cassette, the cassette defining a mutually orthogonal length, width, and height, the cassette including a main body including a pair of sidewalls extending along the length and an end wall extending along the width between the pair of sidewalls, the sidewalls and the end wall each extending along the height; an adapter wall positioned between the sidewalls of the main body, the adapter wall positioned along the length distal to the end wall, wherein a first operable end of the adapter wall extends from an exterior of main body, and wherein a second operable end of the adapter wall extends to an interior of the main body; and a cover disposed onto the main body, wherein the cover includes a passage wall at which a routing passage extends from a first cable opening at a first end and a second cable opening at a second end, the routing passage extending to a passthrough opening extending through the cover to a slack storage area formed at the main body.
24. The optical fiber cassette of any one or more clauses herein, wherein the passage wall at the cover extends from the first cable opening and the second cable opening to the passthrough opening, the passage wall forming the routing passage configured to receive a cable from the first or second cable openings.
25. The optical fiber cassette of any one or more clauses herein, wherein the slack storage area is formed at the interior of the main body between the pair of sidewalls, the end wall, and the adapter wall at the main body.
26. The optical fiber cassette of any one or more clauses herein, the slack storage area including an internal wall extending along a height from a base wall toward the cover.
27. The optical fiber cassette of any one or more clauses herein, wherein the routing passage forms a curved or serpentine routing passage.
28. The optical fiber cassette of any one or more clauses herein, the cover and the main body including a fastener opening into which a fastener is extendable to secure the cover to the main body.
29. The optical fiber cassette of any one or more clauses herein, wherein the passthrough opening is positioned alongside the end wall or the sidewall.
30. The optical fiber cassette of any one or more clauses herein, the cover including a latch configured to selectively attach and release at a latch interface at the si dewall .
31. The optical fiber cassette of any one or more clauses herein, wherein the main body is a unitary, monolithic component.
32. The optical fiber cassette of any one or more clauses herein, wherein a cable retention interface is positioned at the first cable opening, the second cable opening, or both.
33. The optical fiber cassette of any one or more clauses herein, wherein the cable retention interface forms an arcuate opening through which the cable, or portions thereof, is extendable.
34. The optical fiber cassette of any one or more clauses herein, including an adapter base wall extending along the width between the sidewalls at the main body, the adapter base wall extending at least partially along length from the adapter wall, wherein the first cable opening is at least partially formed through the adapter base wall.
35. An optical fiber cassette, the cassette defining a mutually orthogonal length, width, and height, the cassette including a main body including a pair of sidewalls extending along the length and an end wall extending along the width between the pair of sidewalls, the sidewalls and the end wall each extending along the height; an adapter wall positioned between the sidewalls of the main body, the adapter wall positioned along the length distal to the end wall, wherein a first operable end of the adapter wall extends from an exterior of main body, and wherein a second operable end of the adapter wall extends to an interior of the main body; and a cover disposed onto the main body, wherein the cover includes a passage wall at which a routing passage extends from a cable opening at a first end or a second end, the routing passage extending to a passthrough opening extending through the cover to a slack storage area formed at the main body.
36. The optical fiber cassette of any one or more clauses herein, wherein the passage wall at the cover extends from the cable opening to the passthrough opening, the passage wall forming the routing passage configured to receive a cable from the cable opening.
37. The optical fiber cassette of any one or more clauses herein, wherein the slack storage area is formed at the interior of the main body between the pair of sidewalls, the end wall, and the adapter wall at the main body.
38. The optical fiber cassette of any one or more clauses herein, the slack storage area including an internal wall extending along a height from a base wall toward the cover.
39. The optical fiber cassette of any one or more clauses herein, the cover and the main body including a fastener opening through which a fastener is extendable to secure the cover to the main body.
40. The optical fiber cassette of any one or more clauses herein, wherein the passthrough opening is positioned alongside the end wall or the sidewall.
41. The optical fiber cassette of any one or more clauses herein, wherein a cable retention interface is positioned at the cable opening.
42. The optical fiber cassette of any one or more clauses herein, including an adapter base wall extending along the width between the sidewalls at the main body, the adapter base wall extending at least partially along length from the adapter wall, wherein the first cable opening is at least partially formed through the adapter base wall.
43. A datarack including a chassis and the optical fiber cassette of any one or more clauses herein.
44. A chassis for a telecommunications datarack, the chassis including the optical fiber cassette of any one or more clauses herein.
45. A chassis for a telecommunications datarack, the chassis including a depressible latch configured to releasably retain the chassis to the optical fiber cassette of any one or more clauses herein.
46. The chassis of any one or more clauses herein, wherein the latch is configured to receive the optical fiber cassette from a front end of the chassis and a rear side of the chassis.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. An optical fiber cassette (100), the cassette (100) defining a mutually orthogonal length (L), width (W), and height (H), the cassette (100) comprising:
A main body (110) comprising a pair of sidewalls (108) extending along the length (L) and an end wall (106) extending along the width (W) between the pair of sidewalls (108), the sidewalls (108) and the end wall (106) each extending along the height (H);
an adapter wall (130) positioned between the sidewalls (108) of the main body (110), the adapter wall (130) positioned along the length (L) distal to the end wall (106), wherein a first operable end of the adapter wall (130) extends from an exterior of main body (110), and wherein a second operable end of the adapter wall (130) extends to an interior of the main body (110); and
a cover (120) disposed onto the main body (110), wherein the cover (120) comprises a passage wall (133) at which a routing passage (135) extends from a first cable opening (117) at a first end and a second cable opening (138) at a second end, the routing passage (135) extending to a passthrough opening (160) extending through the cover (120) to a slack storage area (140) formed at the main body (110).

2. An optical fiber cassette (100) according to claim 1, wherein the passage wall (133) at the cover (120) extends from the first cable opening (117) and the second cable opening (138) to the passthrough opening (160), the passage wall (133) forming the routing passage (135) configured to receive a cable (191) from the first or second cable openings (117, 138).

3. An optical fiber cassette (100) according to claim 1 or claim 2, wherein the routing passage (135) forms a curved or serpentine routing passage.

4. An optical fiber cassette (100) according to any preceding claim, the cover (120) and the main body (110) comprising a fastener opening (125, 129) into which a fastener (137) is extendable to secure the cover (120) to the main body (110).

5. An optical fiber cassette (100) according to any preceding claim, wherein the passthrough opening (160) is positioned alongside the end wall (106) or the sidewall (108).

6. An optical fiber cassette (100) according to any preceding claim, the cover (120) comprising a latch (122) configured to selectively attach and release at a latch interface (123) at the sidewall (108).

7. An optical fiber cassette (100) according to any preceding claim, wherein the main body (110) is a unitary, monolithic component.

8. An optical fiber cassette (100) according to any preceding claim, wherein a cable retention interface (139) is positioned at the first cable opening (117), the second cable opening (138), or both, and wherein the cable retention interface (139) optionally forms an arcuate opening through which the cable (191), or portions thereof, is extendable.

9. An optical fiber cassette (100), the cassette (100) defining a mutually orthogonal length (L), width (W), and height (H), the cassette (100) comprising:
a main body (110) comprising a pair of sidewalls (108) extending along the length (L) and an end wall (106) extending along the width (W) between the pair of sidewalls (108), the sidewalls (108) and the end wall (106) each extending along the height (H);
an adapter wall (130) positioned between the sidewalls (108) of the main body (110), the adapter wall (130) positioned along the length (L) distal to the end wall (106), wherein a first operable end of the adapter wall (130) extends from an exterior of main body (110), and wherein a second operable end of the adapter wall (130) extends to an interior of the main body (110); and
a cover (120) disposed onto the main body (110), wherein the cover (120) comprises a passage wall (133) at which a routing passage (135) extends from a cable opening (117, 138) at a first end or a second end, the routing passage (135) extending to a passthrough opening (160) extending through the cover (120) to a slack storage area (140) formed at the main body (110).

10. An optical fiber cassette (100) according to claim 9, wherein the passage wall (133) at the cover (120) extends from the cable opening (117, 138) to the passthrough opening (160), the passage wall (133) forming the routing passage (135) configured to receive a cable (191) from the cable opening (117, 138).

11. An optical fiber cassette (100) according to any preceding claim, wherein the slack storage area (140) is formed at the interior of the main body (110) between the pair of sidewalls (108), the end wall (106), and the adapter wall (130) at the main body (110), the slack storage area (140) optionally comprising an internal wall (132) extending along a height (H) from a base wall toward the cover (120).

12. An optical fiber cassette (100) according to any of claims 9 to 11, the cover (120) and the main body (110) comprising a fastener opening (125, 129) through which a fastener (137) is extendable to secure the cover (120) to the main body (110).

13. An optical fiber cassette (100) according to any of claims 9 to 12, wherein the passthrough opening (160) is positioned alongside the end wall (106) or the sidewall (108).

14. An optical fiber cassette (100) according to any of claims 9 to 13, wherein a cable retention interface (137) is positioned at the cable opening (117, 138).

15. An optical fiber cassette (100) according to any preceding claim, comprising:
an adapter base wall (116) extending along the width (W) between the sidewalls (108) at the main body (110), the adapter base wall (116) extending at least partially along the length (L) from the adapter wall (130), wherein the cable opening (138) is at least partially formed through the adapter base wall (116).
